(19) Europäisches Patentamt / European Patent Office / Office européen des brevets

(11) **EP 4 412 025 B1**

(12) **EUROPEAN PATENT SPECIFICATION**

(45) Date of publication and mention
of the grant of the patent:
**24.06.2026   Bulletin 2026/26**

(21) Application number: **22874963.6**

(22) Date of filing: **28.09.2022**

(51) International Patent Classification (IPC):
*H02J 7/40* (2026.01)       *H02J 7/47* (2026.01)
*H02J 7/80* (2026.01)       *B60L 53/30* (2019.01)
*B60L 53/16* (2019.01)       *H02J 7/00* (2026.01)

(52) Cooperative Patent Classification (CPC):
**H02J 7/485; B60L 53/16; B60L 53/305; H02J 7/40;
H02J 7/47; H02J 7/80;** B60L 2270/147;
H02J 2105/37

(86) International application number:
**PCT/CN2022/122011**

(87) International publication number:
**WO 2023/051578 (06.04.2023 Gazette 2023/14)**

(54) **CHARGING GUIDANCE SIGNAL ACQUISITION CIRCUIT, NEW ENERGY VEHICLE-MOUNTED CHARGING BASE, AND CHARGING PILE**

LADEFÜHRUNGSSIGNALERFASSUNGSSCHALTUNG, AUF EINEM NEUEN ENERGIEFAHRZEUG MONTIERTE LADEBASIS UND LADESÄULE

CIRCUIT D'ACQUISITION DE SIGNAL DE GUIDAGE DE CHARGE, BASE DE CHARGE MONTÉE SUR UN VÉHICULE À ÉNERGIES NOUVELLES, ET PILE DE CHARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **28.09.2021   CN 202111144495**

(43) Date of publication of application:
**07.08.2024   Bulletin 2024/32**

(73) Proprietor: **Changchun Jetty Automotive
Technology Co., Ltd.
Changchun, Jilin 130000 (CN)**

(72) Inventor: **WANG, Chao
Changchun, Jilin 130000 (CN)**

(74) Representative: **Boult Wade Tennant LLP
Salisbury Square House
8 Salisbury Square
London EC4Y 8AP (GB)**

(56) References cited:
CN-A- 106 059 563       CN-A- 111 422 091
CN-A- 112 918 302       CN-A- 113 794 260
CN-U- 207 336 607       CN-U- 208 270 647
CN-U- 208 270 647       US-A1- 2009 091 307
US-A1- 2009 091 307

**Description**

TECHNICAL FIELD

The present disclosure relates to the technical field of charging guidance signal acquisition for new energy vehicles, and particularly to a charging guidance signal acquisition circuit, a new energy vehicle-mounted charging socket and a charging pile.

BACKGROUND

The charging guidance signal of a new energy vehicle can realize the communication functions such as connection confirmation, charging current confirmation and charging start-stop between a new energy vehicle-mounted charging socket and a charging pile. At present, there is no international standard for the charging guidance signal of the new energy vehicle, and the charging guidance signal standards vary among different countries/regions. As a result, a new energy vehicle that can be charged normally in one country/region may not be charged normally in another country/region. Therefore, how to improve the charging adaptability of the new energy vehicle has become an urgent technical problem to be solved.

The charging guidance signal acquisition circuit, a new energy vehicle-mounted charging socket and a charging pile can be known in the prior art, e.g, from the documents CN208270647U and CN111422091A.

SUMMARY

The embodiments of the present disclosure aim to provide a charging guidance signal acquisition circuit, a new energy vehicle-mounted charging socket and a charging pile, so as to improve the charging adaptability of a new energy vehicle.

In order to achieve the above objective, in an aspect, the embodiment of the present disclosure provide a charging guidance signal acquisition circuit in accordance with claim 1. The circuit comprises:

a signal amplification and filtering circuit configured to receive a charging guidance signal, and amplify and filter the received charging guidance signal; and
a voltage divider circuit, an input end of which is connected to an output end of the signal amplification and filtering circuit, and configured to adjust the charging guidance signal processed by the signal amplification and filtering circuit to a target value, which is a voltage that meets electrical requirements of a charging guidance signal input pin of a vehicle-mounted charging controller; the voltage divider circuit includes at least two adjustable resistors connected in series, and resistances of the adjustable resistors are adjustable according to the electrical requirements of the charging guidance signal input pin.

The charging guidance signal acquisition circuit further comprises a pre-stage voltage divider circuit, an output end of which is connected to an input end of the signal amplification and filtering circuit, and configured to receive the charging guidance signal and reduce a voltage of the charging guidance signal by means of voltage division, so as to provide amplification space for the signal amplification and filtering circuit.

In an embodiment of the present disclosure, the voltage divider circuit comprises a first adjustable resistor and a second adjustable resistor connected in series; one end of the first adjustable resistor is connected to the output end of the signal amplification and filtering circuit; the other end of the first adjustable resistor is connected to one end of the second adjustable resistor; the other end of the second adjustable resistor is connected to a wire grounding end; and a third connection point between the first adjustable resistor and the second adjustable resistor forms an output end of the charging guidance signal acquisition circuit.

In an embodiment of the present disclosure, an impedance ratio of the first adjustable resistor to the second adjustable resistor is not less than 52.3.

In an embodiment of the present disclosure, an amplification of the signal amplification and filtering circuit is at least 20, and a cut-off frequency of the filtering in the signal amplification and filtering circuit is 10 to 50 Hz.

In an embodiment of the present disclosure, a voltage reduction multiple of the pre-stage voltage divider circuit is at least 20 times.

In an embodiment of the present disclosure, the charging guidance signal acquisition circuit further comprises: a filtering circuit, an output end of which is connected to an input end of the pre-stage voltage divider circuit and used as an input end of the charging guidance signal acquisition circuit; and the filtering circuit is configured to filter an electromagnetic interference of an original charging guidance signal to obtain a charging guidance signal.

In an embodiment of the present disclosure, the filtering circuit comprises a first capacitor, a second capacitor, a first magnetic bead and an inductor; the first capacitor, the second capacitor and the first magnetic bead form a $\pi$ filter configured to filter a high-frequency electromagnetic interference of the original charging guidance signal; and the inductor is connected to the $\pi$ filter to filter electromagnetic interferences except a cut-off frequency of the $\pi$ filter.

In an embodiment of the present disclosure, an input end of the first magnetic bead is used as the input end of the charging guidance signal acquisition circuit, and an output end of the first magnetic bead is connected to an input end of the inductor; an output end of the inductor is connected to the input end of the pre-stage voltage divider circuit; one end of the first capacitor is connected to the input end of the first magnetic bead, and the other end of the first capacitor is connected to a protective grounding end; and one end of the second capacitor is connected to the output end of the first magnetic bead, and the other end of the second capacitor is connected to the protective grounding end.

In an embodiment of the present disclosure, the pre-stage voltage divider circuit comprises a first resistor and a second resistor; one end of the first resistor is connected to the output end of the filtering circuit; the other end of the first resistor is connected to one end of the second resistor; the other end of the second resistor is connected to a wire grounding end; and a first connection point between the first resistor and the second resistor forms the output end of the pre-stage voltage divider circuit.

In an embodiment of the present disclosure, the signal amplification and filtering circuit comprises an operational amplifier, a third resistor, a fourth resistor, a third capacitor and a fourth capacitor; a noninverting input end of the operational amplifier is connected to the output end of the pre-stage voltage divider circuit; an output end of the operational amplifier is connected to the input end of the voltage divider circuit; one end of the third resistor is connected to the output end of the operational amplifier; the other end of the third resistor is connected to one end of the fourth resistor; the other end of the fourth resistor is connected to a wire grounding end; an inverting input end of the operational amplifier is connected to a second connection point which is between the third resistor and the fourth resistor; a positive power source pin of the operational amplifier is connected to a DC power source; a negative power source pin of the operational amplifier is connected to the wire grounding end; the third resistor and the fourth resistor form an amplification adjustment circuit of the operational amplifier; one end of the third capacitor is connected to the noninverting input end of the operational amplifier; the other end of the third capacitor is connected to the wire grounding end; the third capacitor is configured to filter an electromagnetic interference of the noninverting input end of the operational amplifier; one end of the fourth capacitor is connected to the output end of the operational amplifier; the other end of the fourth capacitor is connected to the second connection point; and the fourth capacitor is configured to filter an electromagnetic interference of the output end of the operational amplifier.

In an embodiment of the present disclosure, the charging guidance signal acquisition circuit further comprises a second magnetic bead; one end of the second magnetic bead is connected to a wire grounding end of the charging guidance signal acquisition circuit; the other end of the second magnetic bead is connected to a protective grounding end; and the second magnetic bead is configured to realize high-frequency isolation between the wire grounding end and the protective grounding end.

In another aspect, the embodiments of the present disclosure further provide a new energy vehicle-mounted charging socket, comprising:

>   a charging guidance signal receiving end; and
>   the aforementioned charging guidance signal acquisition circuit, the input end of which is connected to an output end of the charging guidance signal receiving end.

In still another aspect, the embodiments of the present disclosure further provide a charging pile, comprising:

>   a charging guidance signal output end; and
>   the aforementioned charging guidance signal acquisition circuit, the output end of which is connected to an input end of the charging guidance signal output end.

As can be seen from the above technical solutions provided by the embodiments of the present disclosure, the voltage divider circuit in the embodiments of the present disclosure can accurately adjust the charging guidance signal to a voltage that meets the electrical requirements of the charging guidance signal input pin of the vehicle-mounted charging controller, so that the new energy vehicle can adapt to the charging guidance signal standards of new energy vehicles in different countries/regions, thereby overcoming or alleviating the problem that it is difficult to charge the new energy vehicle normally due to the lack of uniformity charging guidance signal standards, and further improving the charging adaptability of the new energy vehicle.

BRIEF DESCRIPTION OF THE DRAWINGS

In order to more clearly explain the technical solutions in the embodiments of the present disclosure or the prior art, the drawings to be used in the description of the embodiments or the prior art will be briefly introduced as follows. Obviously, the drawings used in the following description only illustrate some embodiments of the present disclosure, and those of ordinary skill in the art can obtain other drawings from them without paying any creative labor. In the drawings:

FIG. 1 illustrates a structural block diagram of a charging guidance signal acquisition circuit in some embodiments of the present disclosure;

FIG. 2 illustrates a schematic circuit diagram of a charging guidance signal acquisition circuit in some embodiments of the present disclosure;

FIG. 3 illustrates a structural block diagram of a charging guidance signal acquisition circuit in some other embodiments of the present disclosure;

FIG. 4 illustrates a schematic circuit diagram of a charging guidance signal acquisition circuit in some other embodiments of the present disclosure;

FIG. 5 illustrates a structural block diagram of a charging guidance signal acquisition circuit in some other embodiments of the present disclosure;

FIG. 6 illustrates a schematic circuit diagram of a charging guidance signal acquisition circuit in some other embodiments of the present disclosure;

FIG. 7 illustrates a schematic diagram of a connection between a wire grounding end and a protective grounding end of a charging guidance signal acquisition circuit in some embodiments of the present disclosure;

FIG. 8 illustrates a structural block diagram of a new energy vehicle-mounted charging socket in some embodiments of the present disclosure; and

FIG. 9 illustrates a structural block diagram of a charging pile in some embodiments of the present disclosure.

[Reference signs]

10: filtering circuit;
20: pre-stage voltage divider circuit;
30: signal amplification and filtering circuit;
40: voltage divider circuit;
R1: first resistor;
R2: second resistor;
R3: third resistor;
R4: fourth resistor;
R5: first adjustable resistor;
R6: second adjustable resistor;
C1: first capacitor;
C2: second capacitor;
C3: third capacitor;
C4: fourth capacitor;
FB1: first magnetic bead;
FB2: inductor;
FB3: second magnetic bead;
UA1: operational amplifier;
100: new energy vehicle-mounted charging socket;
200: charging pile.

## DETAILED DESCRIPTION OF THE PREFERRED EMBODIMENTS

In order that persons skilled in the art can better understand the technical solutions in the present disclosure, the technical solutions in the embodiments of the present disclosure will be clearly and completely described below with reference to the drawings for the embodiments of the present disclosure. Obviously, those described are merely a part, rather than all, of the embodiments of the present disclosure. Based on the embodiments of the present disclosure, any other embodiment obtained by those of ordinary skill in the art without paying any creative labor should fall within the protection scope of the present disclosure. For example, in the following description, the formation of a second component above a first component may include an embodiment in which the first component and the second component are formed in direct contact, an embodiment in which the first component and the second component are formed in indirect contact (i.e., additional components may be included between the first component and the second component), etc.

Moreover, for the convenience of description, spatially relative terms such as 'above', 'below', 'top' and 'under' can be used in some descriptions to describe the relationship(s) between one element or component and another (or others) as illustrated in various drawings for the embodiments. It should be understood that the spatial relative terms are intended to include different orientations of a device in use or operation in addition to the orientations depicted in the drawings. For example, if the device in the drawings is turned over, an element or component described as being 'below' or 'under' other elements or components will be positioned as being 'above' or 'on' other elements or components.

In view of the problem that it is difficult to charge the new energy vehicle normally due to the lack of uniformity charging guidance signal standards of new energy vehicles in various countries/regions, the embodiments of the present disclosure provide a charging guidance signal acquisition circuit, which enables the new energy vehicle to adapt to the charging guidance signal standards of new energy vehicles in different countries/regions, so as to overcome or alleviate the problem that it is difficult to charge the new energy vehicle normally due to the lack of uniformity charging guidance signal standards, thereby improving the charging adaptability of the new energy vehicle. In addition, the charging guidance signal acquisition circuit of the embodiments of the present disclosure can be applied to a new energy vehicle-mounted charging socket and a charging pile, which may be selected as required during implementation.

Persons skilled in the art can understand that the new energy vehicle in the embodiments of the present disclosure refers to a Battery Electric vehicle (BEV), a plug-in Hybrid Electric Vehicle (HEV), etc., wherein the vehicle is driven with electricity and a power battery is chargeable. In addition, the charging pile in the embodiments of the present disclosure refers to a charging pile for charging the new energy vehicle; and the charging guidance signal in the embodiments of the present disclosure generally refers to a DC charging guidance signal.

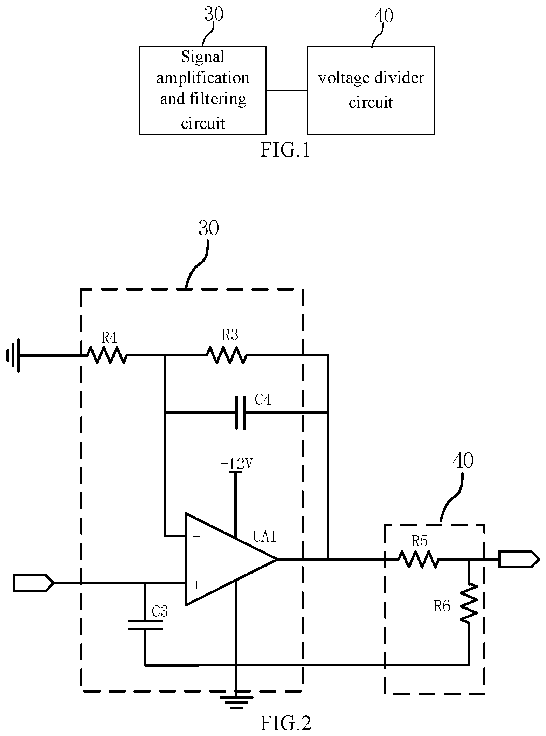

Referring to FIG. 1, in some embodiments, the charging guidance signal acquisition circuit may include a signal amplification and filtering circuit 30 and a voltage divider circuit 40.

The signal amplification and filtering circuit 30 may be configured to receive a charging guidance signal and amplify and filter the received charging guidance signal. By means of amplification, a voltage of the charging guidance signal may be increased to exceed voltages corresponding to all (or most) existing charging guidance signal standards, thereby facilitating the subsequent voltage divider circuit to carry out a voltage-division regulation. In some embodiments, the signal amplification and filtering circuit 30 has an amplification of at least 20 times, so as to provide a sufficient input voltage for the voltage division by the subsequent voltage divider circuit 40. Through the filtration by the signal amplification and filtering circuit 30, the anti-electromagnetic interference performance of the charging guidance signal acquisition circuit can be improved. In some embodiments, a cut-off frequency of the filtering in the signal amplification and filtering circuit 30 is 10 to 50 Hz.

An input end of the voltage divider circuit 40 is connected to an output end of the signal amplification and filtering circuit 30, and the voltage divider circuit 40 may be configured to adjust the charging guidance signal output by the signal amplification and filtering circuit 30 to a target value, which is a voltage that meets electrical requirements of a charging guidance signal input pin of an vehicle-mounted charging controller. In which, the voltage divider circuit may include at least two adjustable resistors connected in series (i.e., voltage division resistors with adjustable resistances), and the resistances of the adjustable resistors are adjustable according to the electrical requirements of the charging guidance signal input pin. The charging guidance signal input pins of different vehicle-mounted charging controllers allows different maximum voltages such as 3.3V and 5V to be input. Therefore, in the embodiments of the present disclosure, the voltage divider circuit 40 is designed such that an output voltage is adjustable. Specifically, when the voltage of the charging guidance signal is higher than a target value, the output voltage of the voltage divider circuit 40 may be lowered to the target value. In this way, the new energy vehicle can adapt to the charging guidance signal standards of new energy vehicles in different countries/regions, thereby overcoming or alleviating the problem that it is difficult to charge the new energy vehicle normally due to the lack of uniformity charging guidance signal standards, and further improving the charging adaptability of the new energy vehicle.

Referring to FIG. 2, in some embodiments, the signal amplification and filtering circuit 30 may include an operational amplifier UA1, a third resistor R3, a fourth resistor R4, a third capacitor C3 and a fourth capacitor C4. A noninverting input end of the operational amplifier UA1 is configured to receive a charging guidance signal; an output end of the operational amplifier UA1 is connected to an input end of the voltage divider circuit 40; one end of the third resistor R3 is connected to the output end of the operational amplifier UA1; the other end of the third resistor R3 is connected to one end of the fourth resistor R4; the other end of the fourth resistor R4 is connected to a wire grounding end; an inverting input end of the operational amplifier UA1 is connected to a second connection point which is between the third resistor R3 and the fourth resistor R4; a positive power source pin of the operational amplifier UA1 is connected to a DC power source (e.g., +12V in FIG. 2); a negative power source pin of the operational amplifier UA1 is connected to the wire grounding end; the third resistor R3 and the fourth resistor R4 form an amplification adjustment circuit of the operational amplifier UA1, so that the output end of the operational amplifier UA1 can output a charging guidance signal meeting a set amplification. In which, an amplification of the amplification adjustment circuit may be expressed as $A = \dfrac{R3}{R4}$ .

Since the operational amplifier UA1 has a high input impedance and a large common-mode rejection ratio, the charging guidance signal output by the signal amplification and filtering circuit 30 is more stable than the charging guidance signal received thereby. In addition, since the operational amplifier UA1 has a small output impedance, the subsequent voltage divider circuit 40 can have a stronger load driving capability.

Referring to FIG. 2, one end of the third capacitor C3 is connected to the noninverting input end of the operational amplifier UA1; the other end of the third capacitor C3 is connected to the wire grounding end; the third capacitor C3 is configured to filter an electromagnetic interference of the noninverting input end of the operational amplifier UA1. In this way, the anti-electromagnetic interference performance of the noninverting input end of the operational amplifier UA1 can be improved. One end of the fourth capacitor C4 is connected to the output end of the operational amplifier UA1; the other end of the fourth capacitor C4 is connected to a second connection point; the fourth capacitor C4 is configured to filter an electromagnetic interference of the output end of the operational amplifier UA1. In this way, the anti-electromagnetic interference performance of the output end of the operational amplifier UA1 can be improved.

Referring to FIG. 2, in some embodiments, the voltage divider circuit 40 may include a first adjustable resistor R5 and a second adjustable resistor R6. One end of the first adjustable resistor R5 is connected to the output end of the signal amplification and filtering circuit UA1; the other end of the first adjustable resistor R5 is connected to one end of the second adjustable resistor R6; the other end of the second adjustable resistor R6 is connected to the wire grounding end; and a third connection point between the first adjustable resistor R5 and the second adjustable resistor R6 forms an output end of the charging guidance signal acquisition circuit. According to the principle of pressure division:

$$U' = U'1 + U'2 = \frac{R5}{R5 + R6} \times U' + \frac{R6}{R5 + R6} \times U'$$ ; so, an output end voltage of the voltage divider circuit 40 may be expressed as: $$U'2 = U' - U'1 = \frac{R6}{R5 + R6} \times U'$$ .

In this way, through a simple double-resistor voltage divider circuit, it is not only possible to adapt the charging guidance signal to the electrical requirements of the charging guidance signal input pin of the vehicle-mounted charging controller, but also advantageous to reduce the implementation cost and improve the reliability. In which, a resistance relationship between the first resistor R1 and the second resistor R2 may be set based on a voltage division ratio (i.e., $\frac{U'2}{U'}$ ). For the convenience of adjustment, at least one of the first adjustable resistor R5 and the second adjustable resistor R6 is an adjustable resistor. In this way, the output end voltage of the voltage divider circuit 40 can be adjusted by adjusting the voltage division ratio.

For example, in an embodiment, the charging guidance signal input pin of some vehicle-mounted charging controllers allows the input voltage to be 5V, while the charging guidance signal output by the charging pile is usually 12V. In order to make the vehicle-mounted charging controller work normally, the output end voltage of the voltage divider circuit 40 should be adjusted to be no more than 5V. In this case, an impedance ratio of the first adjustable resistor R5 to the second adjustable resistor R6 should not be less than 52.3. In order to make the impedance ratio of the first adjustable resistor R5 to the second adjustable resistor R6 not less than 52.3, a ratio of a minimum resistance of the first adjustable resistor R5 to a maximum resistance of the second adjustable resistor R6 should not be less than 52.3. When the charging guidance signal input pin of some other vehicle-mounted charging controllers allows the input voltage to be less than 5V (e.g., be 3.3V), the impedance ratio of the first adjustable resistor R5 to the second adjustable resistor R6 should be larger, which can be realized by increasing the resistance of the first adjustable resistor R5 and/or decreasing the resistance of the second adjustable resistor R6. In this way, the output voltage range of the voltage divider circuit 40 can meet the charging guidance signal standards of new energy vehicles in different countries/regions.

In some embodiments, the adjustment of the voltage division ratio in the voltage divider circuit 40 may be realized by manually adjusting the resistance linearly or stepwise through an adjustment knob, i.e., the resistance of the first adjustable resistor R5 and/or the second adjustable resistor R6 may be changed through the adjustment knob, so that the adjustment cost is low. In some other embodiments, the first adjustable resistor R5 and the second adjustable resistor R6 of the voltage divider circuit 40 may be disposed as a structure convenient for mounting and disassembly, so that the voltage division ratio in the voltage divider circuit 40 can be adjusted by replacing the first adjustable resistor R5 and/or the second adjustable resistor R6.

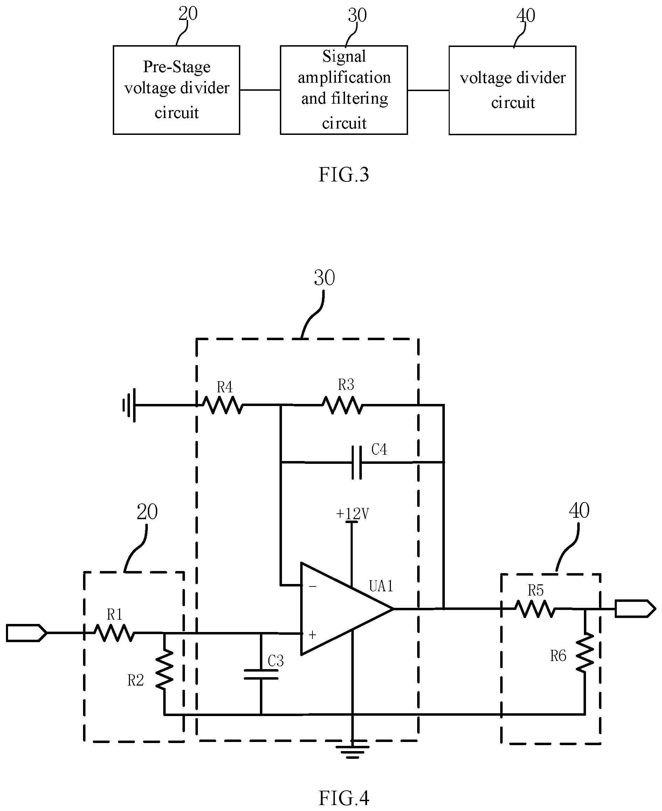

Referring to FIG. 3, in some other embodiments, the charging guidance signal acquisition circuit may further include a pre-stage voltage divider circuit 20, an input end of which may receive the charging guidance signal, and an output end of which is connected to an input end of the signal amplification and filtering circuit 30. The pre-stage voltage divider circuit 20 may be configured to receive the charging guidance signal and reduce a voltage of the charging guidance signal by means of voltage division, so as to provide amplification space for the signal amplification and filtering circuit. In some embodiments, a voltage reduction multiple of the pre-stage voltage divider circuit 20 is at least 20 times. Moreover, through such voltage reduction of the pre-stage voltage divider circuit 20, it is also advantageous to make the charging guidance signal meet the input voltage requirements of the input end of the signal amplification and filtering circuit 30 (i.e., it is advantageous to make the voltage of the charging guidance signal within the allowable input voltage range of the input end of the signal amplification and filtering circuit 30).

Referring to FIG. 4, in some embodiments, the pre-stage voltage divider circuit 20 may include a first resistor R1 and a second resistor R2. One end of the first resistor R1 may serve as the input end of the charging guidance signal acquisition circuit, and the first resistor R1 is configured to receive a charging guidance signal; the other end of the first resistor R1 is connected to one end of the second resistor R2; the other end of the second resistor R2 is connected to a wire grounding end; a first connection point between the first resistor R1 and the second resistor R2 forms the output end of the pre-stage voltage divider circuit 20. According to the principle of partial pressure:

$$U = U1 + U2 = \frac{R1}{R1+R2} \times U + \frac{R2}{R1+R2} \times U$$ ; so, an output end voltage of the pre-stage voltage divider circuit 20 may be expressed as: $$U2 = U - U1 = \frac{R2}{R1+R2} \times U$$ . In this way, through a simple double-resistor voltage divider circuit, it is not only possible to realize the voltage division (or called as voltage reduction) of the charging guidance signal, but also advantageous to reduce the implementation cost and improve the reliability. In which, a resistance relationship between the first resistor R1 and the second resistor R2 may be set according to a voltage division ratio (i.e., $\frac{U2}{U}$ ). For

example, when the voltage division ratio is 0.5 (i.e., the voltage of the charging guidance signal is reduced to half of the original value by the pre-stage voltage divider circuit 20), the resistances of the first resistor R1 and the second resistor R2 may be equal.

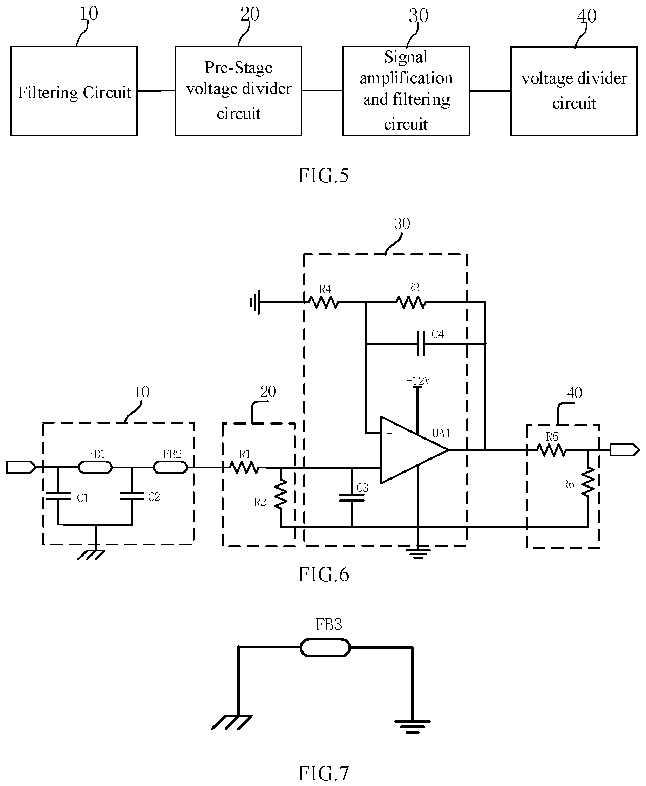

Referring to FIG. 5, in some other embodiments, in addition to the pre-stage voltage divider circuit 20, the signal amplification and filtering circuit 30 and the voltage divider circuit 40, the charging guidance signal acquisition circuit may further include a filtering circuit 10. An input end of the filtering circuit 10 is used as an input end of the charging guidance signal acquisition circuit to receive an original charging guidance signal; an output end of the filtering circuit 10 is connected to the input end of the pre-stage voltage divider circuit 20; the filtering circuit 10 may be configured to filter an electromagnetic interference of an original charging guidance signal, so as to achieve the effect of further improving the anti-electromagnetic interference capability of the charging guidance signal acquisition circuit through precise filtering.

In the embodiments of the present disclosure, the original charging guidance signal refers to a charging guidance signal that has not been processed by the charging guidance signal acquisition circuit of the embodiments in the present disclosure. The source of the original charging guidance signal varies depending on the application scenarios.

For example, in some embodiments, when the charging guidance signal acquisition circuit is applied to the scenario of a new energy vehicle-mounted charging socket, the original charging guidance signal may be provided by a charging guidance signal receiving end of the new energy vehicle-mounted charging socket, i.e., the charging guidance signal receiving end may receive the charging guidance signal sent by the charging pile and provide the charging guidance signal to the charging guidance signal acquisition circuit.

In some other embodiments, when the charging guidance signal acquisition circuit is applied to the scenario of the charging pile, the original charging guidance signal may be provided by a charging guidance signal output end of the charging pile; that is, the charging guidance signal acquisition circuit is added between the charging guidance signal output end and a charging guidance signal generation circuit, so that the charging guidance signal generated by the charging guidance signal generation circuit can be adjusted to an appropriate value by the charging guidance signal acquisition circuit, and the adjusted charging guidance signal is provided to the new energy vehicle-mounted charging socket by the charging guidance signal output end.

Referring to FIG. 6, in some embodiments, the filtering circuit 10 may include a first capacitor C1, a second capacitor C2, a first magnetic bead FB1 and an inductor FB2; the first capacitor C1, the second capacitor C2 and the first magnetic bead FB1 form a $\pi$ filter configured to filter a high-frequency electromagnetic interference of an original charging guidance signal; and the inductor FB2 is connected to the $\pi$ filter to filter electromagnetic interferences except a cut-off frequency of the $\pi$ filter. An input end of the first magnetic bead FB1 serves as the input end of the charging guidance signal acquisition circuit, and an output end of the first magnetic bead FB1 is connected to an input end of the inductor FB2; an output end of the inductor FB2 is connected to the input end of the pre-stage voltage divider circuit; one end of the first capacitor C1 is connected to the input end of the first magnetic bead FB1, and the other end of the first capacitor C1 is connected to a protective grounding end; one end of the second capacitor C2 is connected to the output end of the first magnetic bead FB1, and the other end of the second capacitor C2 is connected to the protective grounding end. By directly connecting the first capacitor C1 and the second capacitor C2 of the $\pi$ filter to the protective grounding end, the interference to the secondary circuit (i.e., the pre-stage voltage divider circuit 20) can be reduced as much as possible.

In addition, in order to realize that the inductor FB2 can filter electromagnetic interferences except the cut-off frequency of the $\pi$ filter, it is necessary to determine the cut-off frequency of the $\pi$ filter firstly, and then select the inductor FB2 with appropriate parameters. For example, when the cut-off frequency of the $\pi$ filter is 50 Hz, an inductor capable of filtering an electromagnetic interference of 0 to 50 Hz should be selected as the inductor FB2. In other embodiments, the first magnetic bead FB1 may be replaced with an inductor and the inductor FB2 may be replaced with a magnetic bead according to actual needs.

It can be understood by persons skilled in the art that in some other embodiments, the pre-stage voltage divider circuit 20 may be replaced by any other suitable DC voltage reduction circuit; the signal amplification and filtering circuit 30 may be replaced by any other suitable filtering and amplifying circuit; and the voltage divider circuit 40 may also be replaced by any other suitable DC voltage reduction circuit.

For example, in some embodiments, the voltage divider circuit 40 may be replaced by an adjustable DC converter circuit, and the controller may obtain and compare an output end voltage of the DC converter circuit with a target value; when the output end voltage of the DC converter circuit does not match the target value, the controller (e.g., an MCU, a single chip microcomputer, etc.) may output a pulse signal to adjust a duty ratio of a switch tube of the DC converter circuit until the output end voltage of the DC converter circuit matches the target value, thereby realizing an automatic control. This control mode is more accurate and efficient, and saves the trouble of manual adjustment. In which, when the charging guidance signal acquisition circuit is applied to the scenario of a new energy vehicle-mounted charging socket, the controller may be an vehicle-mounted charging controller; and when the charging guidance signal acquisition circuit is applied to the scenario of a charging pile, the controller may be a controller of the charging pile. In this way, it is advantageous to make full use of the original components and reduce the implementation cost.

For the convenience of description, the charging guidance signal acquisition circuit may be described as various units respectively in terms of function. Of course, the function of each unit may be realized in one or more software and/or hardware when the present disclosure is embodied.

Referring to FIG. 7, in some embodiments, the charging guidance signal acquisition circuit may further include a second magnetic bead FB3; one end of the second magnetic bead FB3 is connected to a wire grounding end of the charging guidance signal acquisition circuit; the other end of the second magnetic bead FB3 is connected to a protective grounding end; the second magnetic bead FB3 is configured to realize high-frequency isolation between the wire grounding end and the protective grounding end. That is, through the use of the second magnetic bead FB3 can meet the requirements of anti-interference connection and effective common grounding connection between the protective grounding end and the wire grounding end.

As described above, the charging guidance signal acquisition circuit of the embodiment of the present disclosure can be applied to the acquisition of any existing charging guidance signal, and has a strong anti-interference capability, thereby ensuring normal charging of the new energy vehicle in various complex environments. Since the application scenarios of the charging guidance signal acquisition circuit of the embodiment of the present disclosure are flexible, modification space can be left for the change of the charging guidance signal standards in the future, and the modification work is extremely simple.

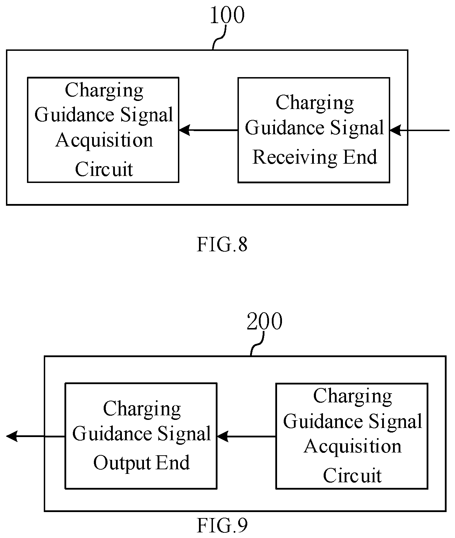

Referring to FIG. 8, the embodiments of the present disclosure further provide a new energy vehicle-mounted charging socket 100, which is configured with a charging guidance signal receiving end and a charging guidance signal acquisition circuit. An input end of the charging guidance signal acquisition circuit is connected to an output end of the charging guidance signal receiving end; an output end of the charging guidance signal acquisition circuit may be connected to a charging guidance signal input pin of an vehicle-mounted charging controller. The charging guidance signal receiving end is configured to be in an abutment with the charging pile to realize the charging of the new energy vehicle. After the abutment between the charging guidance signal receiving end and the charging pile, the charging pile may send a charging guidance signal to the vehicle-mounted charging controller. Since the charging guidance signal acquisition circuit can adjust any standard charging guidance signal to have a voltage that meets electrical requirements of the charging guidance signal input pin of the vehicle-mounted charging controller, the new energy vehicle can adapt to the charging guidance signal standards of new energy vehicles in different countries/regions, thereby overcoming or alleviating the problem that it is difficult to charge the new energy vehicle normally due to the lack of uniformity charging guidance signal standards, and further improving the charging adaptability of the new energy vehicle.

In the new energy vehicle-mounted charging socket according to some embodiments, the charging guidance signal acquisition circuit may include:

a signal amplification and filtering circuit configured to receiving a charging guidance signal and amplify and filter the received charging guidance signal;

a voltage divider circuit, an input end of which is connected to an output end of the signal amplification and filtering circuit, and configured to adjust the charging guidance signal processed by the signal amplification and filtering circuit to a target value, which is a voltage that meets electrical requirements of the charging guidance signal input pin of the vehicle-mounted charging controller; the voltage divider circuit includes at least two adjustable resistors connected in series, and resistances of the adjustable resistors are adjustable according to the electrical requirements of the charging guidance signal input pin.

In the new energy vehicle-mounted charging socket according to some embodiments, the voltage divider circuit includes a first adjustable resistor and a second adjustable resistor connected in series; one end of the first adjustable resistor is connected to the output end of the signal amplification and filtering circuit; the other end of the first adjustable resistor is connected to one end of the second adjustable resistor; the other end of the second adjustable resistor is connected to a wire grounding end; and a third connection point between the first adjustable resistor and the second adjustable resistor forms an output end of the charging guidance signal acquisition circuit.

In the new energy vehicle-mounted charging socket according to some embodiments, an impedance ratio of the first adjustable resistor to the second adjustable resistor is not less than 52.3.

In the new energy vehicle-mounted charging socket according to some embodiments, the signal amplification and filtering circuit should have an appropriate amplification to provide voltage division space for the subsequent voltage divider circuit. For example, in some embodiments, the amplification of the signal amplification and filtering circuit is at least 20 times. In addition, in order to improve the filtering effect, the cut-off frequency of the filtering in the signal amplification and filtering circuit should be as small as possible. Specifically, as the cut-off frequency of the filtering decreases, the coverage of the filtration of the electromagnetic interference is extended, and the anti-electromagnetic interference capability increases. However, in consideration of the implementation cost, it is appropriate that the cut-off frequency of the filtering in the signal amplification and filtering circuit is 10 to 50 Hz.

In the new energy vehicle-mounted charging socket according to some embodiments, the charging guidance signal acquisition circuit further includes:
a pre-stage voltage divider circuit, an output end of which is connected to an input end of the signal amplification and filtering circuit, and configured to receive the charging guidance signal and reduce a voltage of the charging guidance signal by means of voltage division, so as to provide amplification space for the signal amplification and filtering circuit.

In the new energy vehicle-mounted charging socket according to some embodiments, a voltage reduction multiple of the pre-stage voltage divider circuit is at least 20.

In the new energy vehicle-mounted charging socket according to some embodiments, the charging guidance signal acquisition circuit further includes:
a filtering circuit, an output end of which is connected to an input end of the pre-stage voltage divider circuit and used as an input end of the charging guidance signal acquisition circuit; the filtering circuit is configured to filter an electromagnetic interference of an original charging guidance signal to obtain a charging guidance signal.

In the new energy vehicle-mounted charging socket according to some embodiments, the filtering circuit includes a first capacitor, a second capacitor, a first magnetic bead and an inductor; the first capacitor, the second capacitor and the first magnetic bead form a $\pi$ filter configured to filter a high-frequency electromagnetic interference of the original charging guidance signal; the inductor is connected to the $\pi$ filter to filter electromagnetic interferences except the cut-off frequency of the $\pi$ filter.

In the new energy vehicle-mounted charging socket according to some embodiments, an input end of the first magnetic bead is used as the input end of the charging guidance signal acquisition circuit, and an output end of the first magnetic bead is connected to an input end of the inductor; an output end of the inductor is connected to the input end of the pre-stage voltage divider circuit; one end of the first capacitor is connected to the input end of the first magnetic bead, and the other end of the first capacitor is connected to a protective grounding end; one end of the second capacitor is connected to the output end of the first magnetic bead, and the other end of the second capacitor is connected to the protective grounding end.

In the new energy vehicle-mounted charging socket according to some embodiments, the pre-stage voltage divider circuit includes a first resistor and a second resistor; one end of the first resistor is connected to the output end of the filtering circuit; the other end of the first resistor is connected to one end of the second resistor; the other end of the second resistor is connected to a wire grounding end; and a first connection point between the first resistor and the second resistor forms the output end of the pre-stage voltage divider circuit.

In the new energy vehicle-mounted charging socket according to some embodiments, the signal amplification and filtering circuit includes: an operational amplifier, a third resistor, a fourth resistor, a third capacitor and a fourth capacitor; a noninverting input end of the operational amplifier is connected to the output end of the pre-stage voltage divider circuit; an output end of the operational amplifier is connected to the input end of the voltage divider circuit; one end of the third resistor is connected to the output end of the operational amplifier; the other end of the third resistor is connected to one end of the fourth resistor; the other end of the fourth resistor is connected to a wire grounding end; an inverting input end of the operational amplifier is connected to a second connection point which is between the third resistor and the fourth resistor; a positive power source pin of the operational amplifier is connected to a DC power source; a negative power source pin of the operational amplifier is connected to the wire grounding end; the third resistor and the fourth resistor form an amplification adjustment circuit of the operational amplifier; one end of the third capacitor is connected to the noninverting input end of the operational amplifier; the other end of the third capacitor is connected to the wire grounding end; the third capacitor is configured to filter an electromagnetic interference of the noninverting input end of the operational amplifier; one end of the fourth capacitor is connected to the output end of the operational amplifier; the other end of the fourth capacitor is connected to the second connection point; and the fourth capacitor is configured to filter an electromagnetic interference of the output end of the operational amplifier.

In the new energy vehicle-mounted charging socket according to some embodiments, the charging guidance signal acquisition circuit further includes a second magnetic bead; one end of the second magnetic bead is connected to a wire grounding end of the charging guidance signal acquisition circuit; the other end of the second magnetic bead is connected to a protective grounding end; the second magnetic bead is configured to realize high-frequency isolation between the wire grounding end and the protective grounding end.

Referring to FIG. 9, the embodiments of the present disclosure further provide a charging pile 200, which is configured with a charging guidance signal output end and a charging guidance signal acquisition circuit. An input end of the charging guidance signal acquisition circuit may be connected to the charging guidance signal output end; the output end of the charging guidance signal acquisition circuit may be connected to the charging guidance signal receiving end of the new energy vehicle-mounted charging socket. After the abutment between the output end of the charging guidance signal acquisition circuit and the charging guidance signal receiving end of the new energy vehicle-mounted charging socket, a charging guidance signal output by a charging guidance signal generation circuit of the charging pile 200 is provided to the charging guidance signal acquisition circuit for processing through the charging guidance signal output end. Since the charging guidance signal acquisition circuit can adjust any standard charging guidance signal to have a voltage that meets electrical requirements of the charging guidance signal input pin of any vehicle-mounted charging controller, the charging pile 200 can meet (or adapt to) the electrical requirements of the charging guidance signal input pin of any vehicle-mounted charging controller, i.e., the charging pile 200 can charge the new energy vehicles adopting different charging guidance signal standards, thereby overcoming or alleviating the problem that it is difficult to charge the new energy vehicle normally due to the lack of uniformity charging guidance signal standards, and further improving the charging adaptability of the new energy vehicle.

In the charging pile according to some embodiments, the charging guidance signal acquisition circuit may include:

a signal amplification and filtering circuit configured to receive a charging guidance signal and amplify and filter the received charging guidance signal;

a voltage divider circuit, an input end of which is connected to an output end of the signal amplification and filtering circuit, and configured to adjust the charging guidance signal processed by the signal amplification and filtering circuit to a target value, which is a voltage that meets electrical requirements of a charging guidance signal input pin of a vehicle-mounted charging controller; the voltage divider circuit includes at least two adjustable resistors connected in series, and resistances of the adjustable resistors may be adjustable according to the electrical requirements of the charging guidance signal input pin.

In the charging pile according to some embodiments, the voltage divider circuit includes a first adjustable resistor and a second adjustable resistor connected in series; one end of the first adjustable resistor is connected to the output end of the signal amplification and filtering circuit; the other end of the first adjustable resistor is connected to one end of the second adjustable resistor; the other end of the second adjustable resistor is connected to a wire grounding end; and a third connection point between the first adjustable resistor and the second adjustable resistor forms an output end of the charging guidance signal acquisition circuit.

In the charging pile according to some embodiments, an impedance ratio of the first adjustable resistor to the second adjustable resistor is not less than 52.3.

In the charging pile according to some embodiments, an amplification of the signal amplification and filtering circuit is at least 20, and a cut-off frequency of the filtering in the signal amplification and filtering circuit is 10 to 50 Hz.

In the charging pile according to some embodiments, the charging guidance signal acquisition circuit further includes:

a pre-stage voltage divider circuit, an output end of which is connected to an input end of the signal amplification and filtering circuit, and configured to receive the charging guidance signal and reduce a voltage of the charging guidance signal by means of voltage division, so as to provide amplification space for the signal amplification and filtering circuit.

In some charging pile embodiments, a voltage reduction multiple of the pre-stage voltage divider circuit is at least 20.

In the charging pile according to some embodiments, the charging guidance signal acquisition circuit further includes:

a filtering circuit, an output end of which is connected to an input end of the pre-stage voltage divider circuit and used as an input end of the charging guidance signal acquisition circuit; and the filtering circuit is configured to filter an electromagnetic interference of an original charging guidance signal to obtain a charging guidance signal.

In the charging pile according to some embodiments, the filtering circuit includes a first capacitor, a second capacitor, a first magnetic bead and an inductor; the first capacitor, the second capacitor and the first magnetic bead form a $\pi$ filter configured to filter a high-frequency electromagnetic interference of the original charging guidance signal; and the inductor is connected to the $\pi$ filter to filter electromagnetic interferences except a cut-off frequency of the $\pi$ filter.

In the charging pile according to some embodiments, an input end of the first magnetic bead is used as the input end of the charging guidance signal acquisition circuit, and an output end of the first magnetic bead is connected to an input end of the inductor; an output end of the inductor is connected to the input end of the pre-stage voltage divider circuit; one end of the first capacitor is connected to the input end of the first magnetic bead, and the other end of the first capacitor is connected to a protective grounding end; and one end of the second capacitor is connected to the output end of the first magnetic bead, and the other end of the second capacitor is connected to the protective grounding end.

In the charging pile according to some embodiments, the pre-stage voltage divider circuit includes a first resistor and a second resistor; one end of the first resistor is connected to the output end of the filtering circuit; the other end of the first resistor is connected to one end of the second resistor; the other end of the second resistor is connected to a wire grounding end; and a first connection point between the first resistor and the second resistor forms the output end of the pre-stage voltage divider circuit.

In the charging pile according to some embodiments, the signal amplification and filtering circuit includes an operational amplifier, a third resistor, a fourth resistor, a third capacitor and a fourth capacitor; a noninverting input end of the operational amplifier is connected to the output end of the pre-stage voltage divider circuit; an output end of the operational amplifier is connected to the input end of the voltage divider circuit; one end of the third resistor is connected to the output end of the operational amplifier; the other end of the third resistor is connected to one end of the fourth resistor; the other end of the fourth resistor is connected to a wire grounding end; an inverting input end of the operational amplifier is connected to a second connection point which is between the third resistor and the fourth resistor; a positive power source pin of the operational amplifier is connected to a DC power source; a negative power source pin of the operational amplifier is connected to the wire grounding end; the third resistor and the fourth resistor form an amplification adjustment circuit of the operational amplifier; one end of the third capacitor is connected to the noninverting input end of the operational amplifier; the other end of the third capacitor is connected to the wire grounding end; the third capacitor is configured to filter an electromagnetic interference of the noninverting input end of the operational amplifier; one end of the fourth capacitor is connected to the output end of the operational amplifier; the other end of the fourth capacitor is connected to the second connection point; and the fourth capacitor is configured to filter an electromagnetic interference of the output end of the operational amplifier.

In the charging pile according to some embodiments, the charging guidance signal acquisition circuit further includes a second magnetic bead; one end of the second magnetic bead is connected to a wire grounding end of the charging guidance signal acquisition circuit; the other end of the second magnetic bead is connected to a protective grounding end; and the second magnetic bead is configured to realize high-frequency isolation between the wire grounding end and the protective grounding end.

It should also be understood that in the embodiments of the present disclosure, the term 'and/or' is only an association relationship that describes the associated objects, indicating that there may be three relationships. For example, A and/or B may mean three situations: A exists alone, A and B exist at the same time, and B exists alone. In addition, the character '/' herein generally indicates that the contextual objects are an 'or' relationship.

The embodiments of the present disclosure are all described in a progressive manner, and the same or similar portions of the embodiments can refer to each other. Each embodiment lays an emphasis on its distinctions from other embodiments. Particularly, the embodiments of devices (i.e., the new energy vehicle-mounted charging socket and the charging pile) are briefly described because the core improvements thereof are substantially similar to the embodiments of the charging guidance signal acquisition circuit, and please refer to the description of the embodiments of the charging guidance signal acquisition circuit for relevant content.

In the description of the present disclosure, the description of reference terms 'one embodiment', 'some embodiments', 'an example', 'a specific example' or 'some examples' and the like mean that the specific features, structures, materials, or characteristics described in conjunction with the embodiment(s) or example(s) are comprised in at least one embodiment or example of the present disclosure. In the present disclosure, the schematic expressions of the above terms do not necessarily aim at the same embodiment or example. Moreover, the specific features, structures, materials, or characteristics described may be combined in any one or more embodiments or examples in a suitable manner. In addition, a person skilled in the art may combine different embodiments or examples described in the present disclosure and features thereof if there is no contradiction.

**Claims**

1.  A charging guidance signal acquisition circuit, comprising:

    a signal amplification and filtering circuit (30) configured to receive a charging guidance signal, and amplify and filter the received charging guidance signal;
    **characterized in that**, the charging guidance signal acquisition circuit further comprises:

    a voltage divider circuit (40), an input end of which is connected to an output end of the signal amplification and filtering circuit (30), and configured to adjust the charging guidance signal processed by the signal amplification and filtering circuit (30) to a target value, which is a voltage that meets electrical requirements of a charging guidance signal input pin of a vehicle-mounted charging controller; the voltage divider circuit (40) comprises at least two adjustable resistors connected in series, and resistances of the adjustable resistors are adjustable based on the electrical requirements of the charging guidance signal input pin; and
    a pre-stage voltage divider circuit (20), an output end of which is connected to an input end of the signal amplification and filtering circuit (30), and configured to receive the charging guidance signal and reduce a voltage of the charging guidance signal by means of voltage division, so as to provide amplification space for the signal amplification and filtering circuit (30).

2.  The charging guidance signal acquisition circuit according to claim 1, wherein the voltage divider circuit (40) comprises a first adjustable resistor (R5) and a second adjustable resistor (R6) connected in series; one end of the first adjustable resistor (R5) is connected to the output end of the signal amplification and filtering circuit (30); the other end of the first adjustable resistor (R5) is connected to one end of the second adjustable resistor (R6); the other end of the second adjustable resistor (R6) is connected to a wire grounding end; and a third connection point between the first adjustable resistor (R5) and the second adjustable resistor (R6) forms an output end of the charging guidance signal acquisition circuit.

3.  The charging guidance signal acquisition circuit according to claim 2, wherein an impedance ratio of the first adjustable resistor (R5) to the second adjustable resistor (R6) is not less than 52.3.

4.  The charging guidance signal acquisition circuit according to claim 1, wherein an amplification of the signal amplification and filtering circuit (30) is at least 20 times, and a cut-off frequency of the filtering in the signal amplification and filtering circuit (30) is 10 Hz to 50 Hz.

5.  The charging guidance signal acquisition circuit according to claim 1, wherein a voltage reduction multiple of the pre-stage voltage divider circuit (20) is at least 20 times.

6.  The charging guidance signal acquisition circuit according to claim 1, further comprising:
    a filtering circuit (10), an output end of which is connected to an input end of the pre-stage voltage divider circuit (20) and used as an input end of the charging guidance signal acquisition circuit; and the filtering circuit (10) is configured to filter an electromagnetic interference of an original charging guidance signal to obtain a charging guidance signal.

7.  The charging guidance signal acquisition circuit according to claim 6, wherein the filtering circuit (10) comprises a first capacitor (C1), a second capacitor (C2), a first magnetic bead (FB1) and an inductor (FB2); the first capacitor (C1), the second capacitor (C2) and the first magnetic bead (FB1) form a $\pi$ filter configured to filter a high-frequency electromagnetic interference of the original charging guidance signal; and the inductor (FB2) is connected to the $\pi$ filter to filter electromagnetic interferences except a cut-off frequency of the $\pi$ filter.

8.  The charging guidance signal acquisition circuit according to claim 7, wherein an input end of the first magnetic bead (FB 1) is used as the input end of the charging guidance signal acquisition circuit, and an output end of the first magnetic bead (FB1) is connected to an input end of the inductor (FB2); an output end of the inductor (FB2) is connected to the input end of the pre-stage voltage divider circuit (20); one end of the first capacitor (C1) is connected to the input end of the first magnetic bead (FB1), and the other end of the first capacitor (C1) is connected to a protective grounding end; and one end of the second capacitor (C2) is connected to the output end of the first magnetic bead (FB1), and the other end of the second capacitor (C2) is connected to the protective grounding end.

9.  The charging guidance signal acquisition circuit according to claim 6, wherein the pre-stage voltage divider circuit (20) comprises a first resistor (R1) and a second resistor (R2); one end of the first resistor (R1) is connected to the output end of the filtering circuit (10); the other end of the first resistor (R1) is connected to one end of the second resistor (R2); the other end of the second resistor (R2) is connected to a wire grounding end; and a first connection point between the first resistor (R1) and the second resistor (R2) forms the output end of the pre-stage voltage divider circuit (20).

10. The charging guidance signal acquisition circuit according to claim 1, wherein the signal amplification and filtering circuit comprises an operational amplifier (UA1), a third resistor (R3), a fourth resistor (R4), a third capacitor (C3) and a fourth capacitor (C4); a noninverting input end of the operational amplifier (UA1) is connected to the output end of the pre-stage voltage divider circuit (20); an output end of the operational amplifier (UA1) is connected to the input end of the voltage divider circuit (40); one end of the third resistor (R3) is connected to the output end of the operational amplifier (UA1); the other end of the third resistor (R3) is connected to one end of the fourth resistor (R4); the other end of the fourth resistor (R4) is connected to a wire grounding end; an inverting input end of the operational amplifier (UA1) is connected to a second connection point which is between the third resistor (R3) and the fourth resistor (R4); a positive power source pin of the operational amplifier (UA1) is connected to a DC power source; a negative power source pin of the operational amplifier (UA1) is connected to the wire grounding end; the third resistor (R3) and the fourth resistor (R4) form an amplification adjustment circuit of the operational amplifier (UA1); one end of the third capacitor (C3) is connected to the noninverting input end of the operational amplifier (UA1); the other end of the third capacitor (C3) is connected to the wire grounding end; the third capacitor (C3) is configured to filter an electromagnetic interference of the noninverting input end of the operational amplifier (UA1); one end of the fourth capacitor (C4) is connected to the output end of the operational amplifier; the other end of the fourth capacitor (C4) is connected to the second connection point; and the fourth capacitor (C4) is configured to filter an electromagnetic interference of the output end of the operational amplifier (UA1).

11. The charging guidance signal acquisition circuit according to claim 1, further comprising a second magnetic bead (FB3); one end of the second magnetic bead (FB3) is connected to a wire grounding end of the charging guidance signal acquisition circuit; the other end of the second magnetic bead (FB3) is connected to a protective grounding end; and the second magnetic bead (FB3) is configured to realize high-frequency isolation between the wire grounding end and the protective grounding end.

12. A new energy vehicle-mounted charging socket, comprising:

a charging guidance signal receiving end; and
the charging guidance signal acquisition circuit according to any one of claims 1 to 11, the input end of which is connected to an output end of the charging guidance signal receiving end.

13. A charging pile, comprising:

a charging guidance signal output end; and
the charging guidance signal acquisition circuit according to any one of claims 1 to 11, the output end of which is connected to an input end of the charging guidance signal output end.

**Patentansprüche**

1. Schaltung zur Ladeführungssignalerfassung, umfassend:

eine Signalverstärkungs- und Filterungsschaltung (30), die konfiguriert ist, um ein Ladeführungssignal zu empfangen, und das empfangene Ladeführungssignal zu verstärken und zu filtern;
**dadurch gekennzeichnet, dass** die Schaltung zur Ladeführungssignalerfassung weiter umfasst:

eine Spannungsteilerschaltung (40), deren Eingangsende mit einem Ausgangsende der Signalverstärkungs- und Filterungsschaltung (30) verbunden und konfiguriert ist, um das von der Signalverstärkungs- und Filterungsschaltung (30) verarbeitete Ladeführungssignal auf einen Zielwert anzupassen, der eine Spannung ist, die elektrische Anforderungen eines Eingangspins eines Ladeführungssignals einer fahrzeugmontierten Ladesteuereinheit erfüllt; die Spannungsteilerschaltung (40) mindestens zwei in Reihe verbundene anpassbare Widerstände umfasst, und Widerstandswerte der anpassbaren Widerstände basierend auf den elektrischen Anforderungen des Eingangspins eines Ladeführungssignals anpassbar sind; und
eine Vorstufen-Spannungsteilerschaltung (20), deren Ausgangsende mit einem Eingangsende der Signalverstärkungs- und Filterungsschaltung (30) verbunden und konfiguriert ist, um das Ladeführungssignal zu empfangen und eine Spannung des Ladeführungssignals mittels Spannungsteilung zu reduzieren, um Verstärkungsraum für die Signalverstärkungs- und Filterungsschaltung (30) bereitzustellen.

2. Schaltung zur Ladeführungssignalerfassung nach Anspruch 1, wobei die Spannungsteilerschaltung (40) einen ersten anpassbaren Widerstand (R5) und einen zweiten anpassbaren Widerstand (R6), die in Reihe verbunden sind, umfasst; ein Ende des ersten anpassbaren Widerstands (R5) mit dem Ausgangsende der Signalverstärkungs- und Filterungsschaltung (30) verbunden ist; das andere Ende des ersten anpassbaren Widerstands (R5) mit einem Ende des zweiten anpassbaren Widerstands (R6) verbunden ist; das andere Ende des zweiten anpassbaren Widerstands (R6) mit einem Erdungsdrahtende verbunden ist; und ein dritter Verbindungspunkt zwischen dem ersten anpassbaren Widerstand (R5) und dem zweiten anpassbaren Widerstand (R6) den Ausgang der Schaltung zur Ladeführungssignalerfassung bildet.

3. Schaltung zur Ladeführungssignalerfassung nach Anspruch 2, wobei ein Impedanzverhältnis des ersten anpassbaren Widerstands (R5) zum zweiten anpassbaren Widerstand (R6) nicht kleiner als 52,3 ist.

4. Schaltung zur Ladeführungssignalerfassung nach Anspruch 1, wobei eine Verstärkung der Signalverstärkungs- und Filterungsschaltung (30) mindestens das 20-fache beträgt, und die Grenzfrequenz der Filterung in der Signalverstärkungs- und Filterungsschaltung (30) 10 Hz und 50 Hz beträgt.

5. Schaltung zur Ladeführungssignalerfassung nach Anspruch 1, wobei das Spannungsreduzierungsvielfache der Vorstufen-Spannungsteilerschaltung (20) mindestens das 20-fache beträgt.

6. Schaltung zur Ladeführungssignalerfassung nach Anspruch 1, weiter umfassend:
eine Filterungsschaltung (10), deren Ausgangsende mit einem Eingangsende der Vorstufen-Spannungsteilerschaltung (20) verbunden ist, und als Eingangsende der Schaltung zur Ladeführungssignalerfassung verwendet wird; und die Filterungsschaltung (10) konfiguriert ist, um eine elektromagnetische Störung eines ursprünglichen Ladeführungssignals zu filtern, um ein Ladeführungssignal zu erhalten.

7. Schaltung zur Ladeführungssignalerfassung nach Anspruch 6, wobei die Filterungsschaltung (10) einen ersten Kondensator (C1), einen zweiten Kondensator (C2), ein erstes Magnetkügelchen (FB1) und eine Induktivität (FB2) umfasst; der erste Kondensator (C1), der zweite Kondensator (C2) und das erste Magnetkügelchen (FB1) einen $\pi$ Filter bilden, der konfiguriert ist, um eine hochfrequente elektromagnetische Störung des ursprünglichen Ladeführungssignals zu filtern; und die Induktivität (FB2) mit dem $\pi$ Filter verbunden ist, um elektromagnetische Störungen mit Ausnahme einer Grenzfrequenz des $\pi$ Filters zu filtern.

8. Schaltung zur Ladeführungssignalerfassung nach Anspruch 7, wobei ein Eingangsende des ersten Magnetkügelchens (FB1) als Eingangsende der Schaltung zur Ladeführungssignalerfassung verwendet wird und ein Ausgangsende des ersten Magnetkügelchens (FB1) mit einem Eingangsende der Induktivität (FB2) verbunden ist; ein Ausgangsende der Induktivität (FB2) mit dem Eingangsende der Vorstufen-Spannungsteilerschaltung (20) verbunden ist; ein Ende des ersten Kondensators (C1) mit dem Eingangsende des ersten Magnetkügelchens (FB1) verbunden ist und das andere Ende des ersten Kondensators (C1) mit einem Schutzleiterende verbunden ist; und ein Ende des zweiten Kondensators (C2) mit dem Ausgangsende des ersten Magnetkügelchens (FB1) verbunden ist und das andere Ende des zweiten Kondensators (C2) mit dem Schutzleiterende verbunden ist.

9. Schaltung zur Ladeführungssignalerfassung nach Anspruch 6, wobei die Vorstufen-Spannungsteilerschaltung (20) einen ersten Widerstand (R1) und einen zweiten Widerstand (R2) umfasst; ein Ende des ersten Widerstands (R1) mit dem Ausgangsende der Filterungsschaltung (10) verbunden ist; das andere Ende des ersten Widerstands (R1) mit einem Ende des zweiten Widerstands (R2) verbunden ist; das andere Ende des zweiten Widerstands (R2) mit einem Erdungsdrahtende verbunden ist; und ein erster Verbindungspunkt zwischen dem ersten Widerstand (R1) und dem zweiten Widerstand (R2) das Ausgangsende der Vorstufen-Spannungsteilerschaltung (20) bildet.

10. Schaltung zur Ladeführungssignalerfassung nach Anspruch 1, wobei die Signalverstärkungs- und Filterungsschaltung einen Betriebsverstärker (UA1), einen dritten Widerstand (R3), einen vierten Widerstand (R4), einen dritten Kondensator (C3) und einen vierten Kondensator (C4) umfasst; ein nichtinvertierendes Eingangsende des Betriebsverstärkers (UA1) mit dem Ausgangsende der Vorstufen-Spannungsteilerschaltung (20) verbunden ist; ein Ausgangsende des Betriebsverstärkers (UA1) mit dem Eingangsende der Spannungsteilerschaltung (40) verbunden ist; ein Ende des dritten Widerstands (R3) mit dem Ausgangsende des Betriebsverstärkers (UA1) verbunden ist; das andere Ende des dritten Widerstands (R3) mit einem Ende des vierten Widerstands (R4) verbunden ist; das andere Ende des vierten Widerstands (R4) mit einem Erdungsdrahtende verbunden ist; ein invertierendes Eingangsende des Betriebsverstärkers (UA1) mit einem zweiten Verbindungspunkt verbunden ist, der sich zwischen dem dritten Widerstand (R3) und dem vierten Widerstand (R4) befindet; ein positiver Leistungsquellenpin des Betriebsverstärkers (UA1) mit einer Gleichstromleistungsquelle verbunden ist; ein negativer Leistungsquellenpin des Betriebsverstärkers (UA1) mit dem Erdungsdrahtende verbunden ist; der dritte Widerstand (R3) und der vierte Widerstand (R4) eine Verstärkungsanpassungsschaltung des Betriebsverstärkers (UA1) bilden; ein Ende des dritten Kondensators (C3) mit dem nichtinvertierenden Eingangsende des Betriebsverstärkers (UA1) verbunden ist; das andere Ende des dritten Kondensators (C3) mit dem Erdungsdrahtende verbunden ist; der dritte Kondensator (C3) konfiguriert ist, um eine elektromagnetische Störung am nichtinvertierenden Eingangsende des Betriebsverstärkers (UA1) zu filtern; ein Ende des vierten Kondensators (C4) mit dem Ausgangsende des Betriebsverstärkers verbunden ist; das andere Ende des vierten Kondensators (C4) mit dem zweiten Verbindungspunkt verbunden ist; und der vierte Kondensator (C4) konfiguriert ist, um eine elektromagnetische Störung des Ausgangsendes des Betriebsverstärkers (UA1) zu filtern.

11. Schaltung zur Ladeführungssignalerfassung nach Anspruch 1, weiter umfassend ein zweites Magnetkügelchen (FB3); wobei ein Ende des zweiten Magnetkügelchens (FB3) mit dem Erdungsdrahtende der Schaltung zur Ladeführungserfassungsschaltung verbunden ist; das andere Ende des zweiten Magnetkügelchens (FB3) mit dem Schutzleiterende verbunden ist; und das zweite Magnetkügelchen (FB3) konfiguriert ist, um eine Hochfrequenz-Isolation zwischen dem Erdungsdrahtende und dem Schutzleiterende zu realisieren.

12. Fahrzeugmontierte Ladebuchse für neue Energiequellen, umfassend:

ein Ladeführungssignalempfangsende; und
die Schaltung zur Ladeführungssignalerfassung nach einem der Ansprüche 1 bis 11, deren Eingangsende mit einem Ausgangsende des Ladeführungssignalempfangsendes verbunden ist.

13. Ladesäule, umfassend:

ein Ladeführungssignalausgangsende; und
die Schaltung zur Ladeführungssignalerfassung nach einem der Ansprüche 1 bis 11, deren Ausgangsende mit einem Eingangsende des Ladeführungssignalausgangsendes verbunden ist.

## Revendications

1. Circuit d'acquisition de signal de guidage de charge, comprenant :

un circuit d'amplification et de filtrage de signal (30) configuré pour recevoir un signal de guidage de charge, et amplifier et filtrer le signal de guidage de charge reçu ;
**caractérisé en ce que** le circuit d'acquisition de signal de guidage de charge comprend en outre :

un circuit diviseur de tension (40), dont une extrémité d'entrée est connectée à une extrémité de sortie du circuit d'amplification et de filtrage de signal (30), et configuré pour ajuster le signal de guidage de charge traité par le circuit d'amplification et de filtrage de signal (30) à une valeur cible, qui est une tension qui répond à des exigences électriques d'une broche d'entrée de signal de guidage de charge d'un dispositif de commande de charge monté sur véhicule ; le circuit diviseur de tension (40) comprend au moins deux résistances ajustables connectées en série, et des valeurs de résistance ajustables sont ajustables sur la base des exigences électriques de la broche d'entrée de signal de guidage de charge ; et
un circuit diviseur de tension de pré-étage (20), dont une extrémité de sortie est connectée à une extrémité d'entrée du circuit d'amplification et de filtrage de signal (30), et configuré pour recevoir le signal de guidage de charge et réduire une tension du signal de guidage de charge au moyen d'une division de tension, de manière à fournir un espace d'amplification pour le circuit d'amplification et de filtrage de signal (30).

2. Circuit d'acquisition de signal de guidage de charge selon la revendication 1, dans lequel le circuit diviseur de tension (40) comprend une première résistance ajustable (R5) et une deuxième résistance ajustable (R6) connectées en série ; une extrémité de la première résistance ajustable (R5) est connectée à l'extrémité de sortie du circuit d'amplification et de filtrage de signal (30) ; l'autre extrémité de la première résistance ajustable (R5) est connectée à une extrémité de la deuxième résistance ajustable (R6) ; l'autre extrémité de la deuxième résistance ajustable (R6) est connectée à une extrémité de mise à la terre ; et un troisième point de connexion entre la première résistance ajustable (R5) et la deuxième résistance ajustable (R6) forme une extrémité de sortie du circuit d'acquisition de signal de guidage de charge.

3. Circuit d'acquisition de signal de guidage de charge selon la revendication 2, dans lequel le rapport d'impédance de la première résistance ajustable (R5) à la deuxième résistance ajustable (R6) n'est pas inférieur à 52,3.

4. Circuit d'acquisition de signal de guidage de charge selon la revendication 1, dans lequel l'amplification du circuit d'amplification et de filtrage de signal (30) est d'au moins 20 fois, et la fréquence de coupure du filtrage dans le circuit d'amplification et de filtrage de signal (30) est de 10 Hz à 50 Hz.

5. Circuit d'acquisition de signal de guidage de charge selon la revendication 1, dans lequel un multiple de réduction de tension du circuit diviseur de tension de pré-étage (20) est d'au moins 20 fois.

6. Circuit d'acquisition de signal de guidage de charge selon la revendication 1, comprenant en outre :
un circuit de filtrage (10), dont une extrémité de sortie est connectée à une extrémité d'entrée du circuit diviseur de tension de pré-étage (20) et utilisée comme extrémité d'entrée du circuit d'acquisition de signal de guidage de charge ; et le circuit de filtrage (10) est configuré pour filtrer une interférence électromagnétique d'un signal de guidage de charge d'origine pour obtenir un signal de guidage de charge.

7. Circuit d'acquisition de signal de guidage de charge selon la revendication 6, dans lequel le circuit de filtrage (10) comprend un premier condensateur (C1), un deuxième condensateur (C2), une première bille magnétique (FB1) et une inductance (FB2) ; le premier condensateur (C1), le deuxième condensateur (C2) et la première bille magnétique (FB1) forment un filtre $\pi$ configuré pour filtrer une interférence électromagnétique haute fréquence du signal de guidage de charge d'origine ; et l'inductance (FB2) est connectée au filtre $\pi$ pour filtrer les interférences électromagnétiques à l'exception d'une fréquence de coupure du filtre $\pi$.

8. Circuit d'acquisition de signal de guidage de charge selon la revendication 7, dans lequel une extrémité d'entrée de la première bille magnétique (FB1) est utilisée comme extrémité d'entrée du circuit d'acquisition de signal de guidage de charge, et une extrémité de sortie de la première bille magnétique (FB1) est connectée à une extrémité d'entrée de l'inductance (FB2) ; une extrémité de sortie de l'inductance (FB2) est connectée à l'extrémité d'entrée du circuit diviseur de tension de pré-étage (20) ; une extrémité du premier condensateur (C1) est connectée à l'extrémité d'entrée de la première bille magnétique (FB1), et l'autre extrémité du premier condensateur (C1) est connectée à une extrémité de mise à la terre de protection ; et une extrémité du deuxième condensateur (C2) est connectée à l'extrémité de sortie de la première bille magnétique (FB1), et l'autre extrémité du deuxième condensateur (C2) est connectée à l'extrémité de mise à la terre de protection.

9. Circuit d'acquisition de signal de guidage de charge selon la revendication 6, dans lequel le circuit diviseur de tension de pré-étage (20) comprend une première résistance (R1) et une deuxième résistance (R2) ; une extrémité de la première résistance (R1) est connectée à l'extrémité de sortie du circuit de filtrage (10) ; l'autre extrémité de la première résistance (R1) est connectée à une extrémité de la deuxième résistance (R2) ; l'autre extrémité de la deuxième résistance (R2) est connectée à une extrémité de mise à la terre du fil ; et un premier point de connexion entre la première résistance (R1) et la deuxième résistance (R2) forme l'extrémité de sortie du circuit diviseur de tension de pré-étage (20).

10. Circuit d'acquisition de signal de guidage de charge selon la revendication 1, dans lequel le circuit d'amplification et de filtrage de signal comprend un amplificateur opérationnel (UA1), une troisième résistance (R3), une quatrième résistance (R4), un troisième condensateur (C3) et un quatrième condensateur (C4) ; l'entrée non inverseuse de l'amplificateur opérationnel (UA1) est connectée à la sortie du circuit diviseur de tension de préamplification (20) ; la sortie de l'amplificateur opérationnel (UA1) est connectée à l'entrée du circuit diviseur de tension (40) ; une extrémité de la troisième résistance (R3) est connectée à la sortie de l'amplificateur opérationnel (UA1) ; l'autre extrémité de la troisième résistance (R3) est connectée à une extrémité de la quatrième résistance (R4) ; l'autre extrémité de la quatrième résistance (R4) est connectée à la masse ; l'entrée inverseuse de l'amplificateur opérationnel (UA1) est connectée à un deuxième point de connexion situé entre la troisième résistance (R3) et la quatrième résistance (R4); La broche d'alimentation positive de l'amplificateur opérationnel (UA1) est connectée à une source d'alimentation CC; la broche d'alimentation négative de l'amplificateur opérationnel (UA1) est connectée à la masse ; les troisième (R3) et quatrième (R4) résistances forment un circuit d'ajustement d'amplification de l'amplificateur opérationnel (UA1) ; une extrémité du troisième condensateur (C3) est connectée à l'entrée non inverseuse de l'amplificateur opérationnel (UA1) ; l'autre extrémité du troisième condensateur (C3) est connectée à la masse ; le troisième condensateur (C3) sert à filtrer les interférences électromagnétiques de l'entrée non inverseuse de l'amplificateur opérationnel (UA1) ; une extrémité du quatrième condensateur (C4) est connectée à la sortie de l'amplificateur opérationnel ; l'autre extrémité du quatrième condensateur (C4) est connectée au deuxième point de connexion ; le quatrième condensateur (C4) sert à filtrer les interférences électromagnétiques de la sortie de l'amplificateur opérationnel (UA1).

11. Circuit d'acquisition de signal de guidage de charge selon la revendication 1, comprenant en outre une deuxième bille magnétique (FB3) ; une extrémité de la deuxième bille magnétique (FB3) est connectée à une extrémité de mise à la terre du fil du circuit d'acquisition de signal de guidage de charge ; l'autre extrémité de la deuxième bille magnétique (FB3) est connectée à une extrémité de mise à la terre de protection ; et la deuxième bille magnétique (FB3) est configurée pour réaliser une isolation haute fréquence entre l'extrémité de mise à la terre du fil et l'extrémité de mise à la terre de protection.

12. Nouvelle prise de charge montée sur véhicule, comprenant :

une extrémité de réception du signal de guidage de charge ; et
le circuit d'acquisition de signal de guidage de charge selon l'une quelconque des revendications 1 à 11, dont l'extrémité d'entrée est connectée à une extrémité de sortie de l'extrémité de réception du signal de guidage de charge.

13. Pile de charge, comprenant :

une extrémité de sortie de signal de guidage de charge ; et
le circuit d'acquisition de signal de guidage de charge selon l'une quelconque des revendications 1 à 11, dont l'extrémité de sortie est connectée à une extrémité d'entrée de l'extrémité de sortie du signal de guidage de charge.

FIG.1

FIG.2

20

30

40

| Pre-Stage voltage divider circuit | | Signal amplification and filtering circuit | | voltage divider circuit |

FIG.3

30

R4

R3

C4

+12V

20

40

R5

R1

UA1

−

+

R2

C3

R6

FIG.4

10

Filtering Circuit

20

Pre-Stage
voltage divider
circuit

30

Signal
amplification
and filtering
circuit

40

voltage divider
circuit

FIG.5

30

R4    R3

C4

+12V

10    20    UA1    40

FB1    FB2    R1    R5

C1    C2    R2    C3    R6

FIG.6

FB3

FIG.7

100

```
┌─────────────────────────────────────────────────────────┐
│  ┌──────────────────┐         ┌──────────────────┐       │
│  │    Charging      │         │                  │       │
│  │ Guidance Signal  │ ◄────── │    Charging      │ ◄──── │
│  │   Acquisition    │         │ Guidance Signal  │       │
│  │     Circuit      │         │  Receiving End   │       │
│  └──────────────────┘         └──────────────────┘       │
└─────────────────────────────────────────────────────────┘
```

FIG.8

200

```
┌─────────────────────────────────────────────────────────┐
│     ┌──────────────────┐      ┌──────────────────┐       │
│     │    Charging      │      │    Charging      │       │
│ ◄── │ Guidance Signal  │ ◄─── │ Guidance Signal  │       │
│     │   Output End     │      │   Acquisition    │       │
│     │                  │      │     Circuit      │       │
│     └──────────────────┘      └──────────────────┘       │
└─────────────────────────────────────────────────────────┘
```

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 208270647 U

- CN 111422091 A